# EUROPEAN PATENT SPECIFICATION

(11) **EP 2 177 405 B1**
(45) Date of publication and mention of the grant of the patent: **27.06.2012**
(21) Application number: 08166612.5
(22) Date of filing: 14.10.2008
(51) Int. Cl.: B60S 1/34

(54) **A four-hinged oscillating wiper arm**
Oszillierender Wischerarm mit 4 Gelenken
Bras d'essuie-glace oscillant à quatre articulations

(43) Date of publication of application: 21.04.2010
(73) Proprietor: Federal-Mogul S.A., 6790 Aubange (BE)
(72) Inventor: Boland, Xavier, 6700, Arlon (BE)
(74) Representative: Hooiveld, Arjen Jan Winfried

(56) References cited:
- EP-A- 0 679 559
- US-A- 6 119 301
- US-A1- 2003 024 064

## Description

The invention relates to a four-hinged oscillating wiper arm for a windscreen wiper device, particularly for automobiles, comprising a connecting rod pivotally connected to a driving arm at a first bearing point on said connecting rod and to a control arm at a second bearing point on said connecting rod, a wiper rod pivotally connected to said connecting rod by means of a pivot, as well as a wiper blade connected to said wiper rod, wherein said connecting rod, said driving arm or said control arm is provided with a co-axial rolling-contact bearing relative to a passage in said first and second bearing points.

Such a four-hinged oscillating wiper arm is known. US patent publication no. 2003/0024064 (Heinrich et al) discloses a window wiping device having a wiper arm which has a first crank and a second crank, a mounting part which is mountable by the first crank and the second crank in two points, the mounting part having at least a first plate and a second plate arranged substantially parallel to one another, at least one of the cranks being mounted rotatably between the plates.

A disadvantage of this known oscillating wiper arm is that said axial rolling-contact bearing in practice appears to have a loose fit inside said passage in said first and second bearing points, resulting in play and wear between the parts involved.

It is an object of the invention to obviate this disadvantage, in the sense that a four-hinged oscillating wiper arm is proposed, wherein said axial rolling-contact bearing is retained - in a simple, elegant manner and without play and vibrations during use - inside said passage in said first and second bearing points.

Thereto, according to the invention an oscillating wiper arm mentioned in the preamble is characterized in that said connecting rod comprises a stop surface inside said passage in said first and second bearing points for blocking an axial movement of said rolling-contact bearings relative to said connecting rod,
wherein said stop surface inside said passage in said first bearing point is provided for blocking an axial movement of said rolling-contact bearings relative to said connecting rod in a direction away from a windscreen to be wiped, and wherein said stop surface inside said passage in said second bearing point is provided for blocking an axial movement of said rolling-contact bearings relative to said connecting rod in a direction towards a windscreen to be wiped, or
wherein said stop surface inside said passage in said first bearing point is provided for blocking an axial movement of said rolling-contact bearings relative to said connecting rod in a direction towards a windscreen to be wiped, and wherein said stop surface inside said passage in said second bearing point is provided for blocking an axial movement of said rolling-contact bearings relative to said connecting rod in a direction away from a windscreen to be wiped.

It is noted that the present invention is not restricted to cars, but also refers to rail coaches and other (fast) vehicles.

In a preferred embodiment of an oscillating wiper arm according to the invention said passage in said first and second bearing points comprises at least two opposite stop surfaces. Particularly, said passage in said first and second bearing points comprises along its circumference an inwardly extending edge.

In another preferred embodiment of an oscillating wiper arm in accordance with the invention said co-axial rolling-contact bearing is a ball bearing, preferably a deep groove ball bearing.

In another preferred embodiment of an oscillating wiper arm according to the invention a bolt attached to said driving arm or said control arm is fitted into an inner ring of the rolling contact bearing. Particularly, said bolt is axially secured and non-rotatably held, as said bolt is formed by a shaft with a head fitted with an elastic ring on said deep groove ball bearings.

The invention will now be explained in more detail with reference to figures illustrated in a drawing, wherein:
- Figure 1 is schematic representation of a wiping pattern on a windscreen to be wiped, as seen by the driver, with the use of a four-hinged oscillating wiper arm and a traditional wiper arm;
- Figure 2 is a perspective and schematic view of a preferred embodiment of a four-hinged oscillating wiper arm in accordance with the invention, as seen by a driver of an automobile;
- Figures 3 and 4 show a schematic top view of the four-hinged oscillating wiper arm used in figure 1, provided with a driving arm and a control arm (figure 2) and without a driving arm and a control arm (figure 3); and
- figure 5 corresponds to figure 3, showing the windscreen wiper device as a whole, illustrating the forces exerted thereon.

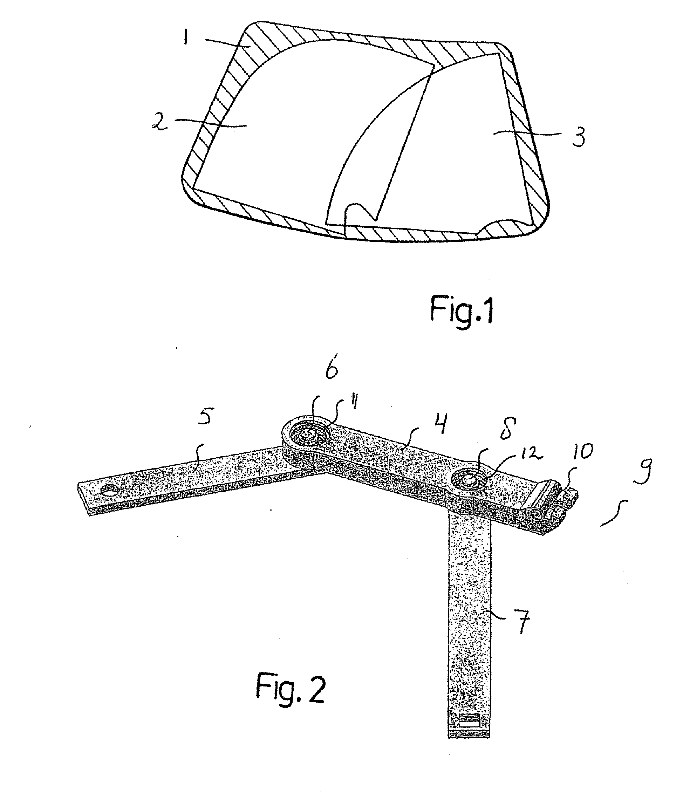

A windscreen 1 to be wiped is wiped by a windscreen wiper device equipped with a four hinged wiper arm resulting into a wiping pattern 2, as well as by a windscreen wiper device having a traditional wiper arm leading to a wiping pattern 3. As can be seen in figure 1, said wiping pattern 2 is larger and is effected not only by a pivotal movement of the four-hinged wiper arm along a shaft, but also by an additional (combined) stroke movement. This movement and, consequently of its wiper blade, is achieved with the aid of a so-called four-joint or four-hinge.

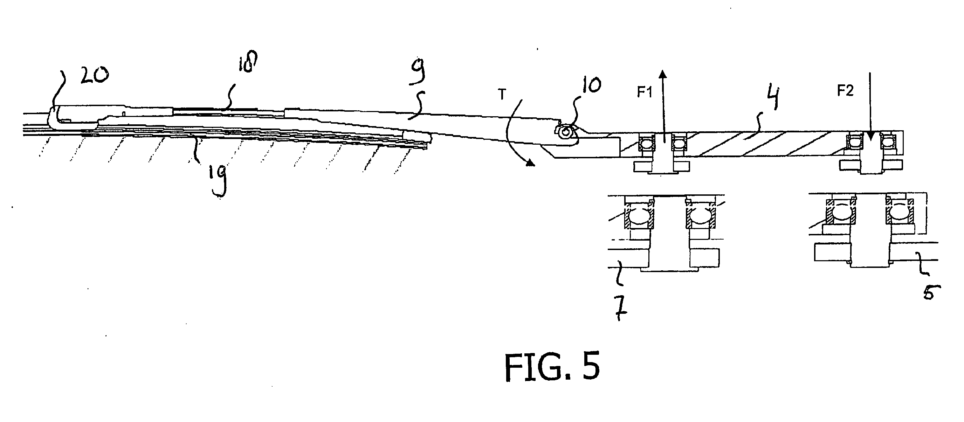

With reference to figure 2 a four-hinged oscillating wiper arm includes the following essential components
(a) a connecting rod 4 pivotally connected at one end thereof to a driving arm 5 at a first bearing point 6 on said connecting rod 4 and at the other end thereof to a control arm 7 at a second bearing point 8 on said connecting rod 4,
(b) a wiper rod 9 (shown in figure 5) pivotally connected to said connecting rod 4 by means of a pivot 10, as well as
(c) a wiper blade (shown in figure 5) connected to said wiper rod 9, wherein said connecting rod 4, said driving arm 5 or said control arm 7 is provided with a ball bearing relative to a passage 11,12 in said first and second bearing points 6,8. Each ball bearing includes an inner ring 13 and an outer ring 14.

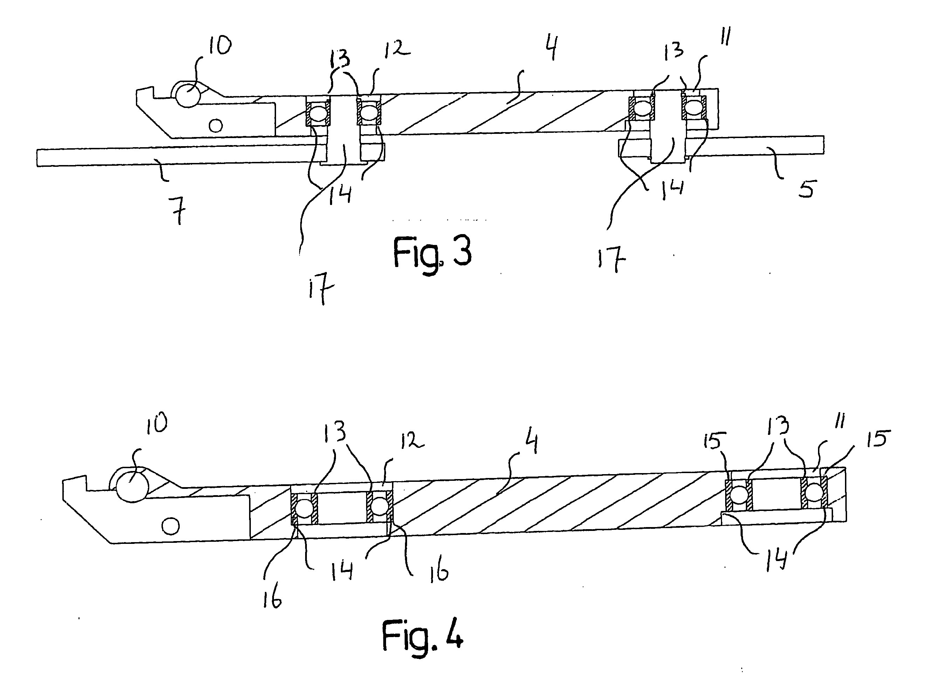

As can be seen in figures 3 and 4, said connecting rod 4 comprises stop surfaces 15,16 inside said passage 11,12 in said first and second bearing points 6,8 for blocking any axial movement of said ball bearings relative to said connecting rod 4. Said stop surface 15 is directed in a direction away from a windscreen 1 to be wiped, while stop surface 16 is directed in a direction towards a windscreen 1 to be wiped. A bolt 17 attached to said driving arm 5 or said control arm 7 is fitted with its head into an inner ring 13 of the ball bearings.

In figure 5 is shown the windscreen wiper device in its entirety, wherein the wiper rod 9 is pivotally connected to the connecting rod 4 by means of the pivot 10, and wherein the wiper rod 9 is connected to an arm member 18, said arm member 18 being connected to a flexible wiper blade 19 with the help of a connecting device 20. Said wiper blade 19 is of the "flat blade" type. Said driving arm 5 is fixed for rotation to a shaft driven, via a mechanism not illustrated, by a small motor. In use, the shaft rotates alternately in a clockwise and in a counter-clockwise sense carrying said driven arm 5 into rotation, which in turn draws the connecting rod 4 and the wiper rod 9 into rotation and by means of the connecting device 20 moves the wiper blade 19. In figure 5 is shown with arrows the forces F1 and F2 exerted on said ball bearings being of the "deep groove" - type. According to the action/reaction rules, the rolling contacts bring an opposite force on the present four-hinge construction, making the proposed stop surfaces in accordance with the invention most appropriate.

The invention is not restricted to the variants shown in the drawing, but it also extends to other embodiments that fall within the scope of the appended claims.

## Claims

1. A four-hinged oscillating wiper arm for a windscreen wiper device, particularly for automobiles, comprising a connecting rod (4) pivotally connected to a driving arm (5) at a first bearing point (6) on said connecting rod (4) and to a control arm (7) at a second bearing point (8) on said connecting rod (4), a wiper rod (9) pivotally connected to said connecting rod (4) by means of a pivot (10), as well as a wiper blade (19) connected to said wiper rod (9), wherein said connecting rod (4), said driving arm (5) or said control arm (7) is provided with a co-axial rolling-contact bearing relative to a passage (11,12) in said first and second bearing points (6,8), **characterized in that** said connecting rod (4) comprises a stop surface (15,16) inside said passage (11,12) in said first and second bearing points (6,8) for blocking an axial movement of said rolling-contact bearings relative to said connecting rod (4),
wherein said stop surface (15) inside said passage (11) in said first bearing point (6) is provided for blocking an axial movement of said rolling-contact bearings relative to said connecting rod (4) in a direction away from a windscreen (1) to be wiped, and wherein said stop surface (16) inside said passage (12) in said second bearing point (8) is provided for blocking an axial movement of said rolling-contact bearings relative to said connecting rod (4) in a direction towards a windscreen (1) to be wiped, or wherein said stop surface (15) inside said passage (11) in said first bearing point (6) is provided for blocking an axial movement of said rolling-contact bearings relative to said connecting rod (4) in a direction towards a windscreen (1) to be wiped, and wherein said stop surface (16) inside said passage (12) in said second bearing point (8) is provided for blocking an axial movement of said rolling-contact bearings relative to said connecting rod (4) in a direction away from a windscreen (1) to be wiped.

2. A four-hinged oscillating wiper arm according to claim 1, wherein said passage (11,12) in said first and second bearing points (6,8) comprises at least two opposite stop surfaces.

3. A four-hinged oscillating wiper arm according to claim 2, wherein said passage (11,12) in said first and second bearing points (6,8) comprises along its circumference an inwardly extending edge.

4. A four hinged oscillating wiper arm according to claim 1,2 or 3, wherein said co-axial rolling-contact bearing is a ball bearing, preferably a deep groove ball bearing.

5. A four hinged oscillating wiper arm according to any of the preceding claims 1 through 4, wherein a bolt (17) attached to said driving arm (5) or said control arm (7) is fitted into an inner ring (13) of the rolling contact bearing.

6. A four hinged oscillating wiper arm according to claim 5, wherein said bolt (17) is axially secured and non-rotatably held by fitting its head with an elastic ring on rolling-contact bearings.

## Patentansprüche

1. Oszillierender Wischerarm mit vier Gelenken für eine Scheibenwischervorrichtung, insbesondere für Kraftfahrzeuge, umfassend:
einen Verbindungsstab (4), der an einem ersten Lagerpunkt (6) auf dem Verbindungsstab (4) schwenkbar mit einem Antriebsarm (5) verbunden ist, und an einem zweiten Lagerpunkt (8) auf dem Verbindungsstab (4) mit einem Steuerarm (7) verbunden ist,
einen Wischerstab (9), der mittels eines Schwenkgelenks (10) schwenkbar mit dem Verbindungsstab (4) verbunden ist, wobei ebenfalls ein Wischerblatt (19) mit dem Wischerstab (9) verbunden ist,
wobei der Verbindungsstab (4), der Antriebsarm (5) oder der Steuerarm (7) mit einem co-axialen Wälzlager versehen ist, das in Bezug auf einen Durchgang (11, 12) in den ersten und dem zweiten Lagerpunkt (6, 8) bereitgestellt ist,
**dadurch gekennzeichnet, dass** der Verbindungsstab (4) in dem Durchgang (11, 12) in den ersten und dem zweiten Lagerpunkt (6, 8) eine Anschlagfläche (15, 16) aufweist,
um eine axiale Bewegung der Wälzlager in Bezug auf den Verbindungsstab (4) zu blockieren,
wobei die Anschlagsfläche (15) in dem Durchgang (11) in dem ersten Lagerpunkt (6) bereitgestellt ist, um eine axiale Bewegung der Wälzlager in Bezug auf den Verbindungsstab (4) in einer Richtung weg von der zu wischenden Windschutzscheibe (1) zu blockieren, und
wobei die Anschlagsfläche (16) in dem Durchgang (12) in dem zweiten Lagerpunkt (8) bereitgestellt ist, um eine axiale Bewegung der Wälzlager in Bezug auf den Verbindungsstab (4) in einer Richtung auf die zu wischenden Windschutzscheibe (1) hin zu blockieren, oder
wobei die Anschlagsfläche (15) in dem Durchgang (11) in dem ersten Lagerpunkt (6) bereitgestellt ist, um eine axiale Bewegung der Wälzlager in Bezug auf den Verbindungsstab (4) in einer Richtung auf die zu wischenden Windschutzscheibe (1) hin zu blockieren, und
wobei die Anschlagsfläche (16) in dem Durchgang (12) in dem zweiten Lagerpunkt (8) bereitgestellt ist, um eine axiale Bewegung der Wälzlager in Bezug auf den Verbindungsstab (4) in einer Richtung von der zu wischenden Windschutzscheibe (1) weg zu blockieren.

2. Oszillierender Wischerarm mit vier Gelenken gemäß Anspruch 1, wobei der Durchgang (11, 12) in den ersten und zweiten Lagerpunkt (6, 8) mindestens zwei gegenüberliegende Anschlagsflächen umfasst.

3. Oszillierender Wischerarm mit vier Gelenken gemäß Anspruch 2, wobei der Durchgang (11, 12) in den ersten und dem zweiten Lagerpunkt (6, 8) entlang seinem Umfang eine sich nach innen erstreckende Kante umfasst.

4. Oszillierender Wischerarm mit vier Gelenken gemäß Anspruch 1, 2 oder 3, wobei das co-axiale Wälzlager ein Kugellager, bevorzugt ein Rillenkugellager ist.

5. Oszillierender Wischerarm mit vier Gelenken gemäß einem der vorstehenden Ansprüche 1 bis 4, wobei ein Bolzen (17) an dem Antriebsarm (5) angebracht ist oder der Steuerarm (7) in einen inneren Ring (13) des Wälzlagers eingepasst ist.

6. Oszillierender Wischerarm mit vier Gelenken gemäß Anspruch 5, wobei der Bolzen (17) axial befestigt ist und nicht drehbar gehalten wird, indem sein Kopf mit einem elastischen Ring auf Wälzlagern angebracht ist.

## Revendications

1. Bras d'essuie-glace oscillant à quatre articulations destiné à un dispositif d'essuie-glace, en particulier pour des automobiles, qui comprend une tige de connexion (4) connectée de manière pivotante à un bras d'entraînement (5) au niveau d'un premier point d'appui (6) sur ladite tige de connexion (4) et à un bras de commande (7) au niveau d'un second point d'appui (8) sur ladite tige de connexion (4), une tige d'essuie-glace (9) connectée de manière pivotante à ladite tige de connexion (4) au moyen d'un pivot (10), ainsi qu'un balai d'essuie-glace (19) connecté à ladite tige d'essuie-glace (9), dans lequel ladite tige de connexion (4), ledit bras d'entraînement (5) ou ledit bras de commande (7) est équipé de paliers à roulement coaxiaux relatifs à un passage (11, 12) dans lesdits premier et second points d'appui (6, 8), **caractérisé en ce que** ladite tige de connexion (4) comprend une surface d'arrêt (15, 16) à l'intérieur dudit passage (11, 12) dans lesdits premier et second points d'appui (6, 8), destinée à bloquer un déplacement axial desdits paliers à roulement relatifs à ladite tige de connexion (4) ;
dans lequel ladite surface d'arrêt (15) à l'intérieur dudit passage (11) dans ledit premier point d'appui (6) est prévue pour bloquer un déplacement axial desdits paliers à roulement relatifs à ladite tige de connexion (4) en direction inverse d'un pare-brise (1) à essuyer, et dans lequel ladite surface d'arrêt (16) à l'intérieur dudit passage (12) dans ledit second point d'appui (8) est prévue pour bloquer un déplacement axial desdits paliers à roulement relatifs à ladite tige de connexion (4) en direction d'un pare-brise (1) à essuyer ; ou
dans lequel ladite surface d'arrêt (15) à l'intérieur dudit passage (11) dans ledit premier point d'appui (6) est prévue pour bloquer un déplacement axial desdits paliers à roulement relatifs à ladite tige de connexion (4) en direction d'un pare-brise (1) à essuyer, et dans lequel ladite surface d'arrêt (16) à l'intérieur dudit passage (12) dans ledit second point d'appui (8) est prévue pour bloquer un déplacement axial desdits paliers à roulement relatifs à ladite tige de connexion (4) en direction inverse d'un pare-brise (1) à essuyer.

2. Bras d'essuie-glace oscillant à quatre articulations selon la revendication 1, dans lequel ledit passage (11, 12) dans lesdits premier et second points d'appui (6, 8) comprend au moins deux surfaces d'arrêt opposées.

3. Bras d'essuie-glace oscillant à quatre articulations selon la revendication 2, dans lequel ledit passage (11, 12) dans lesdits premier et second points d'appui (6, 8) comprend un bord qui s'étend vers l'intérieur le long de sa circonférence.

4. Bras d'essuie-glace oscillant à quatre articulations selon la revendication 1, 2 ou 3, dans lequel ledit palier à roulement coaxial est un roulement à billes, de préférence un roulement à billes à rainure profonde.

5. Bras d'essuie-glace oscillant à quatre articulations selon l'une quelconque des revendications précédentes 1 à 4, dans lequel un boulon (17) fixé audit bras d'entraînement (5) ou audit bras de commande (7) est inséré dans une bague intérieure (13) du palier à roulement.

6. Bras d'essuie-glace oscillant à quatre articulations selon la revendication 5, dans lequel ledit boulon (17) est fixé de manière axiale et tenu de manière non rotative en équipant sa tête d'un anneau élastique sur les paliers à roulement.
